# EUROPÄISCHE PATENTANMELDUNG

(11) **EP 3 912 460 A1**
(43) Veröffentlichungstag der Anmeldung: **24.11.2021**
(21) Anmeldenummer: 21175070.8
(22) Anmeldetag: 20.05.2021
(51) Int. Cl.: A01G 9/16, A01G 9/24

(54) **MOBILE VORRICHTUNG UND VERFAHREN**

(30) Priorität: 20.05.2020 DE 202020102919 U
(71) Anmelder: Baumhöver Frischgeflügel GmbH & Co. KG, 33378 Rheda-Wiedenbrück (DE)
(72) Erfinder: Baumhöver, Burkhard, 33378 Rheda-Wiedenbrück (DE)
(74) Vertreter: BSB Patentanwälte Schütte & Engelen Partnerschaft mbB

(57) **Zusammenfassung**

Mobile landwirtschaftliche Vorrichtung (1) für den mobilen Einsatz auf einer landwirtschaftlichen Nutzfläche (3) und Verfahren zur mobilen Bewirtschaftung landwirtschaftlicher Nutzflächen. Die mobile landwirtschaftliche Vorrichtung (1) umfasst wenigstens eine mobile Gestelleinrichtung (2) zur Aufnahme eines überdachten und einen Nutzraum (4a) zur Verfügung stellenden landwirtschaftlichen Bauwerks (4), wie einem Treibhaus (5) oder einem Gewächshaus (5). Die Gestelleinrichtung (2) umfasst eine Rahmeneinrichtung (6) mit einer Mehrzahl an Rahmenelementen (7). Durch die Rahmeneinrichtung (6) ist ein Nutzabschnitt (3a) der Nutzfläche (3) als Nutzboden (3b) abtrennbar, der von oberhalb der Rahmeneinrichtung (6) vollflächig aus zugänglich ist.

## Beschreibung

Die vorliegende Erfindung betrifft eine mobile landwirtschaftliche Vorrichtung für den mobilen Einsatz eines landwirtschaftlichen Bauwerks wie eines Gewächshauses und ein Verfahren zur mobilen Bewirtschaftung.

Im Stand der Technik sind verschiedene mobile Vorrichtungen mit landwirtschaftlichen Bauwerken für den mobilen Einsatz auf landwirtschaftlichen Nutzflächen bekannt geworden:
Es sind mobile Geflügelställe und insbesondere mobile Hühnerställe bekannt geworden. Der mobile Geflügelstall weist einen Anhänger mit Rädern auf, auf welchem der Geflügelstall aufgenommen ist. Die mobilen Geflügelställe werden aufgestellt, um den Geflügeltieren ausreichend Nahrung und Freilauf zur Verfügung zu stellen. Nach einiger Zeit wird der Hühnerstall umgestellt. Besonders nachteilig ist hierbei, dass die Exkremente der Geflügeltiere zu einer Überdüngung der Nutzflächen führen, welche insbesondere das Grundwasser belasten kann.

Außerdem ist aus der DE 10 2008 018 459 A1 ein verfahrbares Gewächshaus auf Rädern für glatte Rasenflächen wie in Fußballstadien bekannt geworden. Die Räder sind klein, um das nach unten offene Gewächshaus nahe am Rasen zu positionieren. Besonders nachteilig ist hierbei, dass sich die kleinen Räder in einem nassen durchweichten Boden festfressen können, sodass das Gewächshaus nicht mehr bewegbar ist.

Aus der WO 2008/115065 A1 ist ein mobiler Schutztunnel bekannt geworden. Der Schutztunnel kann beispielsweise eingesetzt werden, um empfindliche Pflanzen vor Hagelschäden zu schützen. Der Schutztunnel steht auf Rädern und weist einen großen Abstand zum Boden auf. Besonders nachteilig ist hierbei, dass von unterhalb des Schutztunnels und von den Seiten kein Schutz zur Verfügung gestellt wird.

Aus der KR 1020050078851 A, der US 5,813,169 B1 und der DK 171548 B1 sind mobile Gewächshäuser bekannt geworden, welche einen durchgehenden Boden aufweisen Zum Anbau muss Erde auf dem Betonboden verteilt werden, in dem Pflanzen gezüchtet werden können. Nachteilig ist hierbei, dass die Gewächshäuser nicht für einen Anbau von Pflanzen auf vorhandenen landwirtschaftlichen Nutzflächen nutzbar sind.

Es ist deshalb die Aufgabe der vorliegenden Erfindung eine mobile landwirtschaftliche Vorrichtung und ein Verfahren zur mobilen Bewirtschaftung landwirtschaftlicher Nutzflächen zur Verfügung zu stellen, durch welche ein ökologisches Gleichgewicht landwirtschaftlicher Nutzflächen förderbar ist und insbesondere der Nährstoffgehalt des Bodens regelbar ist.

Die Aufgabe wird durch eine mobile Vorrichtung mit den Merkmalen nach Anspruch 1 und ein Verfahren mit den Merkmalen nach Anspruch 14 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Eine erfindungsgemäße mobile landwirtschaftliche Vorrichtung für den mobilen Einsatz auf wenigstens einer landwirtschaftlichen Nutzfläche umfasst wenigstens eine mobile Gestelleinrichtung zur Aufnahme wenigstens eines wenigstens abschnittsweise überdachten und einen Nutzraum zur Verfügung stellenden landwirtschaftlichen Bauwerks, wie einem Treibhaus oder einem Gewächshaus. Die Gestelleinrichtung umfasst wenigstens eine Rahmeneinrichtung mit einer Mehrzahl an Rahmenelementen. Durch die Rahmeneinrichtung ist wenigstens ein Nutzabschnitt der Nutzfläche als Nutzboden abtrennbar, der von oberhalb der Rahmeneinrichtung, insbesondere von dem Nutzraum, aus im Wesentlichen vollflächig zugänglich ist.

Die Erfindung hat viele Vorteile. Ein wesentlicher Vorteil der Erfindung ist, dass die mobile Vorrichtung direkt auf einer landwirtschaftlichen Nutzfläche, wie einem Acker, positionierbar ist. Insbesondere kontaktiert wenigstens eine Unterseite der Rahmeneinrichtung die Nutzfläche. Besonders vorteilhaft ist durch die Rahmeneinrichtung mit den Rahmenelementen eine große Auflagefläche zur Verfügung stellbar, auf welcher sich die Last eines Bauwerks vorteilhaft auf eine große Fläche verteilen kann, welche sich direkt über den zu bewirtschaftenden Nutzboden erstreckt. Besonders bevorzugt kann so ein Einsinken der Rahmeneinrichtung verhindert werden, sodass auch unbefestigte und frisch gepflügte landwirtschaftliche Flächen durch die mobile Vorrichtung bewirtschaftbar sind. Vorteilhaft ist der Nutzboden dabei direkt von oberhalb der Rahmeneinrichtung aus zugänglich. Ein sicherer Betrieb eines landwirtschaftlichen Bauwerks auf einem Acker ist möglich.

Vorteilhaft kann die mobile Vorrichtung so auf temporär besonders nährstoffreichen und insbesondere überdüngten Böden eingesetzt werden, um durch den gezielten Anbau von beispielsweise starkzehrenden Pflanzen in einem aufgenommenen Gewächshaus regulierbar sein. Insbesondere ist so durch den Einsatz der mobilen Vorrichtung ein ökologisches Gleichgewicht, insbesondere der landwirtschaftlichen Nutzflächen, förderbar.

Eine landwirtschaftliche Nutzfläche im Sinne dieser Anmeldung umfasst wenigstens einen Acker, eine Wiese, eine Brache oder dergleichen. Die Aufzählung ist hier nur beispielhaft und nicht abschließend. Darüber hinaus ist die erfindungsgemäße landwirtschaftliche Vorrichtung auch auf anderen, insbesondere nicht landwirtschaftlichen, Nutzflächen einsetzbar.

Bevorzugt ist der abtrennbare Nutzabschnitt im Wesentlichen vollständig und insbesondere vollflächig von oberhalb der Rahmeneinrichtung zugänglich. Vorteilhaft kann so wenigstens ein wesentlicher Teil und insbesondere der gesamte Nutzboden von oberhalb der Rahmeneinrichtung bewirtschaftet werden. Vorteilhaft sind wenigstens mehr als 50 % der Fläche des Nutzabschnitts von oberhalb der Rahmeneinrichtung aus zugänglich. Insbesondere sind wenigstens mehr als 75 % der Fläche des Nutzabschnitts von oberhalb der Rahmeneinrichtung zugänglich. Insbesondere ist (nahezu) die gesamte Fläche des durch den Nutzabschnitt abgetrennten Nutzbodens von oberhalb der Rahmeneinrichtung aus zugänglich.

Besonders bevorzugt ist wenigstens ein landwirtschaftliches Bauwerk an der Gestelleinrichtung aufgenommen oder ausgebildet. Das Bauwerk kann dadurch vorzugsweise variabel an verschiedenen Orten aufgestellt werden. Vorteilhaft ist das Bauwerk nicht mit dem Boden verankert, sodass keine Baugenehmigung zum mobilen Aufstellen notwendig ist. Besonders vorteilhaft ist das montierte und zusammengebaute Bauwerk an der Gestelleinrichtung aufnehmbar.

Ein landwirtschaftliches Bauwerk im Sinne dieser Anmeldung umfasst insbesondere wenigstens eine Gewächshauseinheit, welche wenigstens ein Gewächshaus oder ein Treibhaus umfasst. Vorzugsweise ist das Gewächshaus und/oder das Treibhaus als Folientunnel ausgebildet. Vorzugsweise ist das Gewächshaus und/oder das Treibhaus als Gewächshaus mit Satteldach ausgebildet.

Vorteilhaft ist das Gewächshaus und/oder der Folientunnel wenigstens teilweise lichtdurchlässig ausgebildet. Insbesondere weist das Gewächshaus wenigstens ein Ständerwerk auf, in welchem vorzugsweise wenigstens bereichsweise Lichteinheiten wie Glasfenster, Plexiglasfenster und/oder Verbundglasfenster eingehängt, eingelegt und/oder vorhanden sind. Vorteilhaft sind wenigstens ein Teil der Lichteinheiten wenigstens teilweise öffnenbare Flächen, insbesondere zum Lüften und zum Einstellen eines Klimas innerhalb des Gewächshauses. Vorzugsweise können in dem Gewächshaus wenigstens teilweise mehrere Ebenen zur Anpflanzung von Pflanzen vorhanden sein.

Vorteilhafterweise umfasst das Gewächshaus und/oder das Treibhaus wenigstens eine Türeinheit. Vorteilhaft umfasst die Türeinheit wenigstens eine Tür zum Betreten des Gewächshauses. Darüber hinaus können auch mehrere Türen vorhanden sein.

Darüber hinaus kann das landwirtschaftliche Bauwerk beispielsweise auch als ein Verkaufsladen, eine Stallung, ein Geräteschuppen, ein Unterstand oder dergleichen ausgebildet sein.

Insbesondere ist das landwirtschaftliche Bauwerk als Gewächshaus mit einem nach oben schließbaren Nutzraum ausgebildet. Vorzugsweise ist der Nutzraum wenigstens teilweise abgeschlossen. Vorteilhaft ist das landwirtschaftliche Bauwerk als Gewächshaus mit wenigstens einem umfänglich schließbaren Nutzraum ausgebildet. Vorteilhaft kann so ein eigenes Klima direkt über dem Nutzboden erzeugt werden. Insbesondere ist dadurch ein mobiler Anbau von Pflanzen in dem Gewächshaus möglich. Insbesondere ist der Anbau von Pflanzen direkt auf der Nutzfläche, welche beispielsweise als Acker ausgebildet ist, möglich. Insbesondere sinkt das Gewächshaus auf der landwirtschaftliche Fläche nicht bzw. kaum ein.

Vorteilhaft weist das landwirtschaftliche Bauwerk über einen wesentlichen Anteil des Nutzabschnitts eine Bodenöffnung auf. Insbesondere ist das landwirtschaftliche Bauwerk wenigstens abschnittsweise bodenlos ausgebildet. Vorteilhaft wird so gewährleistet, dass der durch den Nutzabschnitt von der landwirtschaftlichen Nutzfläche abgetrennte Nutzboden von dem Nutzraum des Bauwerks aus bewirtschaftbar ist. Insbesondere ist der Nutzabschnitt aus dem Inneren des Nutzraums aus zugänglich. Vorteilhaft ist wenigstens eine Kufeneinheit mit wenigstens einer Kufe von der Gestelleinrichtung umfasst oder daran ausgebildet. Vorteilhaft liegt die Kufe auf der Nutzfläche auf und ist direkt über den Boden ziehbar. Insbesondere umfasst die Kufeneinheit zwei oder mehr Kufen. Die Vorrichtung muss zum Transport nicht aufgenommen oder angehoben werden. Insbesondere weist die Kufe eine längliche Form auf und erstreckt sich in Bewegungsrichtung. Vorzugseise weist die Kufe einen ebenen Auflagebereich auf. Durch die Kufe ist insbesondere eine gute seitliche Führung bei gleichzeitig geringer Reibung gewährleistbar. Insbesondere kann die Kufe über Unebenheiten und Löcher im Boden, wie Furchen, problemlos herübergezogen werden.

Insbesondere umfasst die Gestelleinrichtung wenigstens eine Radeinheit. Insbesondere ist die Radeinheit höhenverstellbar. Vorteilhaft kann die Vorrichtung wenigstens ein kurzes Stück über oder auf einer Straße auf eine andere Nutzfläche, wie einen anderen Acker, transportiert werden. Bevorzugt umfasst die Radeinheit wenigstens zwei Räder. Insbesondere umfasst die Radeinheit vier oder mehr Räder. Die Radeinheit kann auch sechs, acht oder noch mehr Räder umfassen. Insbesondere sind die Räder frei drehbar. Vorteilhaft kann die Radeinheit auch wenigstens einen elektrischen Antrieb umfassen. Insbesondere umfasst die Radeinheit wenigstens eine Einrichtung zur Höhenverstellung. Insbesondere erfolgt die Höhenverstellung durch eine Gewindespindel mit einer Handkurbel. Darüber hinaus kann eine Höhenverstellung auch elektrisch, zum Beispiel durch einen Getriebemotor erfolgen.

Die Kufeneinheit und die Radeinheit sind insbesondere Bestandteile einer Mobilitätseinheit, welche die Mobilität der Vorrichtung gewährleistet.

Insbesondere sind wenigstens ein Teil der Rahmenelemente, wenigstens abschnittsweise, als Kufen ausgebildet, auf welchen die Gestelleinrichtung ruhen kann und zum mobilen Einsatz über landwirtschaftliche Nutzflächen ziehbar ist. Insbesondere sind wenigstens die Rahmenelemente als Kufen ausgebildet, welche sich in Zugrichtung erstrecken. Vorteilhaft kann die Rahmeneinrichtung so über den Boden gezogen werden. Vorteilhaft wird hierdurch ein großer Auflagebereich, auch beim Transport, bereitgestellt. Vorzugsweise kann die Last des Bauwerks durch die als Kufen ausgebildeten Rahmenelemente gleichmäßig auf den Boden verteilt werden. Vorteilhaft sind die Kufen besonders kostengünstig als Bestandteil der Rahmeneinrichtung herstellbar.

Vorteilhaft weisen die Kufen wenigstens teilweise einen nach oben schräg verlaufenden oder nach oben gekrümmten Endbereich auf. Insbesondere ist der Endbereich zusätzlich zu einem im Wesentlichen ebenen Auflagebereich der Kufe vorhanden. Durch den vorzugsweise schräg verlaufenden oder insbesondere gekrümmten Endbereich kann die Kufe über kleinere Hindernisse, wie ein Maulwurfshügel oder Steine, herüberzogen werden. Vorteilhaft können die Hindernisse beim Ziehen einfach nach unten bzw. zur Seite weggedrückt werden. Insbesondere sind die Endbereiche der Kufe spiegelsymmetrisch an beiden Enden ausgebildet. Vorteilhaft wird hierdurch ein richtungsunabhängiges Ziehen der Vorrichtung ermöglicht. Der schräg verlaufende oder gekrümmte Endbereich weist insbesondere eine Höhe zwischen ca. 100 mm oder 200 mm auf.

Insbesondere weisen wenigstens die als Kufen ausgebildeten Rahmenelemente wenigstens an der Unterseite der Rahmeneinrichtung, welche insbesondere der landwirtschaftlichen Nutzfläche zugewandt ist, einen ovalen Außenquerschnitt auf. Insbesondere weisen die als Kufen ausgebildeten Rahmenelemente wenigstens an der Unterseite der Rahmeneinrichtung, welche insbesondere der landwirtschaftlichen Nutzfläche zugewandt ist, einen rechteckigen Außenquerschnitt mit abgerundeten Ecken auf. Vorteilhaft wird durch die rundliche Form des Außenquerschnitts ein geringer Widerstand gegen Ziehen ermöglicht. Darüber hinaus erlaubt der runde Querschnitt eine gute Führung der Rahmeneinrichtung in Zugrichtung. Ein ovaler Querschnitt umfasst insbesondere wenigstens einen kreisförmigen wenigstens abschnittsweise an kreisförmigen oder elliptischen Querschnitt ein elliptischen Querschnittsverlauf. Darüber hinaus sind auch andere Querschnitte möglich.

Insbesondere weisen wenigstens die als Kufen ausgebildeten Rahmenelemente eine Auflagebreite und/oder einen Durchmesser zwischen 50 mm und 400 mm auf. Insbesondere beträgt der Durchmesser und/oder die Auflagebreite zwischen 100 mm und 300 mm. Vorteilhaft beträgt der Durchmesser und/oder die Auflagebreite ca. 200 mm (+/- 30%). Insbesondere weisen alle Rahmenelemente den gleichen Durchmesser auf. Vorteilhaft wird durch den großen Durchmesser gewährleistet, dass eine Auflagefläche im Querschnitt leicht gewölbt ist, sodass sich die Kufen im ruhenden Zustand wenigstens teilweise auf dem Untergrund setzen können. Insbesondere können die Rahmenelemente, welche keine Kufe bilden auch einen kleineren Durchmesser aufweisen.

Insbesondere weist die Gestelleinrichtung wenigstens eine Aufnahmeeinheit mit wenigstens einem Flansch zur Aufnahme des landwirtschaftlichen Bauwerks auf. Insbesondere ist der Flansch wenigstens teilweise an einer Oberseite der Rahmeneinrichtung ausgebildet. Der Flansch umfasst vorteilhaft ein Winkelprofil und ist insbesondere U-Profil ausgebildet. Insbesondere kann die Aufnahmeeinheit auch zweiteilig ausgebildet sein. Vorteilhaft ist an dem Flansch wenigstens ein Gummipuffer zur Dämpfung von Schwingungen vorhanden.

Vorzugsweise umfasst wobei die Rahmeneinrichtung wenigstens eine umfänglich geschlossene Struktur, welche aus Rahmenelementen besteht. Insbesondere ist die Rahmeneinrichtung so besonders verwindungssteif und robust.

Vorzugseise kann die geschlossene Struktur auf der landwirtschaftlichen Nutzfläche aufliegen. Insbesondere kann die geschlossene Struktur im Wesentlichen vollumfänglich auf der landwirtschaftlichen Nutzfläche aufliegen. Bevorzugt kann die geschlossene Struktur vollumfänglich auf der landwirtschaftlichen Nutzfläche aufliegen. Vorzugsweise ist die umrahmte Fläche von der Umgebung abdichtbar. Vorteilhaft wird so ein Eindringen beispielsweise von Feldtieren in ein Bauwerk und vorzugsweise in ein Gewächshaus verhindert.

Insbesondere sind an der Gestelleinrichtung wenigstens abschnittsweise Ausgleichselemente zur Abdichtung der Rahmeneinrichtung gegenüber dem Nutzboden vorgesehen. Vorteilhaft kann dadurch auch eine Abdichtung der Rahmeneinrichtung gegenüber tieferen Löchern oder Unebenheiten ermöglicht werden. Insbesondere sind die Ausgleichselemente wenigstens teilweise als Vorhang und vorzugsweise als schwerer Vorhang ausgebildet, welcher insbesondere Stahlkettenglieder umfasst. Insbesondere erstrecken sich die Ausgleichselemente wenigstens teilweise entlang der geschlossenen Struktur.

Insbesondere ist das landwirtschaftliche Bauwerk berührend an der geschlossenen Struktur der Rahmeneinrichtung aufnehmbar. Vorteilhaft ist das landwirtschaftliche Bauwerk im Wesentlichen vollumfänglich berührend an der geschlossenen Struktur der Rahmeneinrichtung aufnehmbar. Vorzugsweise ist das landwirtschaftliche Bauwerk vollumfänglich berührend an der geschlossenen Struktur der Rahmeneinrichtung aufnehmbar. Insbesondere ist das Bauwerk entlang seiner umfänglichen begrenzenden Kontur, d.h. vollumfänglich bzw. entlang des gesamten Umfangs einer seitlichen begrenzenden Kontur, berührend an der geschlossenen Struktur aufgenommen. Vorteilhaft wird so ein Eindringen von Feldtieren zwischen der Rahmeneinrichtung und dem Bauwerk verhindert. Darüber hinaus wird vorzugsweise ein Klima in dem Bauwerk und insbesondere in dem Gewächshaus nicht gestört.

Vorzugsweise weist die Rahmeneinrichtung eine Länge zwischen ca. 2 m und ca. 20 m auf. Besonders bevorzugt weist die Rahmeneinrichtung eine Länge zwischen ca. 5 m und 15 m auf.

Vorteilhafterweise weist die Rahmeneinrichtung eine Länge zwischen 8 m (+/- 30%)auf. Darüber hinaus sind auch noch größere Längen möglich.

Insbesondere weist die Rahmeneinrichtung eine Breite zwischen ca. 1 m und ca. 10 m auf. Besonders bevorzugt weist die Rahmeneinrichtung eine Breite zwischen 3 m und 8 m auf. Vorteilhafterweise weist die Rahmeneinrichtung eine Breite von ca. 5 m (+/- 30%) auf.

Vorteilhaft beträgt die Breite der Rahmeneinrichtung maximal ca. 2,55 m, sodass die Rahmeneinrichtung ohne Demontage auf einer Straße transportierbar ist. Vorteilhaft wird durch die Abmessungen gewährleistet, dass die Rahmeneinrichtung wenigstens teilweise mit einem Traktor wie ein Anhänger ziehbar ist. Darüber hinaus sind auch größere Längen und Breiten möglich.
Vorteilhaft sind wenigstens einige Rahmenelemente paarweise durch eine sicherbare Steckverbindung verbunden und/oder verbindbar. Vorteilhaft wird durch die Steckverbindung eine einfache Anpassung der Abmessungen ermöglicht. Darüber hinaus kann die Rahmeneinrichtung für den Transport über eine lange Strecke demontiert und insbesondere die Rahmenelemente separat verpackt werden. Die Steckverbindung umfasst insbesondere ineinandergreifende Formelemente, welche an den Rahmenelementen ausgebildet sind. Die Steckverbindung kann insbesondere durch Schrauben und/oder Nieten oder dergleichen gesichert werden. Darüber hinaus können die Rahmenelemente auch vorteilhaft miteinander verschweißt sein. Insbesondere sind die Rahmenelemente dann vorteilhaft unlösbar miteinander verbunden.

Vorteilhaft weisen die Rahmenelemente jeweils eine Länge zwischen ca. 0,5 m und 10 m auf. Insbesondere weisen die Rahmenelemente eine Länge zwischen 2 m und 8 m auf. Vorzugweise weisen die Rahmenelemente eine Länge von maximal 6 m (+/- 30 %) auf. Vorzugsweise können die Rahmenelemente so komfortabel in einem landwirtschaftlichen Anhänger transportiert werden, sodass ein Spezialtransporter für Überlängen für den Transport nicht notwendig ist. Darüber hinaus können handelsüblich Halbzeuge zur Herstellung der Rahmenelemente genutzt werden.

Insbesondere sind die die Rahmenelemente wenigstens teilweise als Hohlprofil ausgebildet. Hohlprofile sind kostengünstig und komfortabel bearbeitbar. Hohlprofile sind darüber hinaus vergleichsweise leicht und tragen maßgeblich zu einem geringen Gewicht beim Transport der mobilen Vorrichtung bei. Vorzugsweise weisen die Hohlprofile eine Wandstärke zwischen ca. 1 mm und ca. 10 mm auf. Insbesondere weisen die Hohlprofile eine Wandstärke von ca. 5 mm (+/- 50 %) auf. Darüber hinaus sind auch größere Wandstärken möglich.

Vorzugseise ist wenigstens eine Speichereinheit mit wenigstens einem im Wesentlichen geschlossenen Hohlraum umfasst, in dem wenigstens ein Füllmedium wie Wasser, Kies, Sand, Schüttgut, Beton oder dergleichen aufnehmbar und/oder insbesondere speicherbar ist. Insbesondere ist der Hohlraum geschlossen, sodass ein aufgenommenes Füllmedium nicht selbstständig herauslaufen kann. Vorteilhaft sind die Enden der Hohlprofile hierzu wenigstens teilweise und insbesondere vollständig verschlossen, sodass ein nutzbarer Hohlraum entsteht. Vorteilhaft kann so eine Beschwerung mit dem Füllmedium am Einsatzort erfolgen nach dem Aufstellen erfolgen. Die Gewichtszunahme durch das Füllmedium erhöht die Standfestigkeit und kann die Stabilität der mobilen Vorrichtung insbesondere erhöhen. Darüber hinaus kann gespeichertes Wasser auch als Nutzwasser für das Bauwerk und insbesondere das Gewächshaus genutzt verwendet werden. Darüber hinaus sind auch andere Füllmedien Kies, Steine, Sand, Pulver oder Mixturen von Einzelstoffen in der Speichereinheit zur Beschwerung oder zur Verwendung in dem Nutzraum aufnehmbar und insbesondere speicherbar.

In wenigstens einer vorteilhaften Weiterbildung weist die Speichereinheit wenigstens eine Ventileinheit auf. Die Speichereinheit umfasst insbesondere wenigstens ein Befüllventil zur Befüllung und zum Ablassen des Füllmediums. Das Befüllventil ist insbesondere als verschließbare Klappe ausgebildet. Vorzugsweise umfasst die Ventileinheit wenigstens ein Überdruckventil, durch welche das Füllmedium bei kritischen Zuständen automatisch ablassbar ist. Insbesondere ist durch das Überdruckventil Wasser bei großen Temperaturschwankungen selbständig ablassbar ist. Dadurch kann die Speichereinheit vor einem Schaden durch Frost oder Hitze geschützt werden. Insbesondere ist das Überdruckventil als federbelastetes Ventil ausgeführt, welches beim Überschreiten eines Grenzdrucks automatisch freigibt.

Vorteilhaft weist die Rahmeneinrichtung wenigstens einzelne Verstrebungselemente zur Erhöhung der Steifigkeit auf. Insbesondere sind die Verstrebungselemente wenigstens teilweise stabförmig ausgebildet und überspannen wenigstens teilweise die geschlossene Struktur. Vorteilhaft wird hierdurch ein Verzug der Rahmeneinrichtung beim Ziehen minimiert.

Insbesondere umfasst die Gestelleinrichtung wenigstens eine Kopplungseinheit zum Anschluss an eine Zugmaschine wie einen Traktor. Vorzugsweise umfasst die Kopplungseinheit wenigstens eine Öse zur Aufnahme einer Kette zum Ziehen. Insbesondere umfasst die Kopplungseinheit wenigstens eine Öse zur Aufnahme einer Deichsel zum Ziehen und/oder Schieben. Vorteilhaft ist die Kopplungseinrichtung robust, sodass auch hohe Kräfte wie beim Ziehen über einen tiefen matschigen Boden übertragbar sind. Insbesondere umfasst die Gestelleinrichtung zwei oder mehr Kopplungseinheiten. Vorteilhaft sind die Kopplungseinheiten an gegenüberliegenden Enden der Gestelleinrichtung ausgebildet. Darüber hinaus kann die Gestelleinrichtung auch beispielsweine eine Anhängerkupplung oder dergleichen umfassen.

In wenigstens einer vorteilhaften Weiterbildung umfasst die Vorrichtung und insbesondere die Gestelleinrichtung wenigstens eine Anschlusseinheit für das Bauwerk. Die Anschlusseinheit stellt vorzugsweise wenigstens einen Wasseranschluss zur Verfügung. Die Anschlusseinheit stellt vorzugsweise wenigstens einen Stromanschluss zur Verfügung. An der Anschlusseinheit kann das Bauwerk direkt per Stecker angeschlossen werden, sodass der Fachmann beim Aufstellen keine Kabel anschließen oder Rohre verlegen muss. Darüber hinaus sind auch andere Anschlüsse, wie Fernwärme oder ein Gasanschluss oder dergleichen möglich.

Insbesondere umfasst Vorrichtung und insbesondere die Gestelleinrichtung eine Versorgungseinheit zur Versorgung des landwirtschaftlichen Bauwerks mit elektrischer Energie und Wasser. Vorzugsweise umfasst die Versorgungseinheit wenigstens eine Energieeinheit. Die Energieeinheit umfasst insbesondere wenigstens einen Energiespeichereinheit, die eine ladbare Batterieeinheit, eine Photovoltaikeinheit, eine Ladeeinheit und/oder eine Wechselrichtereinheit zur Steuerung aufweisen kann. Insbesondere umfasst die Versorgungseinheit wenigstens eine Pumpeneinheit zur Förderung von Wasser. Insbesondere ist die Pumpeneinheit an die Speichereinheit anschließbar, sodass Wasser aus der Speichereinheit insbesondere im dem Gewächshaus nutzbar ist.

Vorteilhaft umfasst die Versorgungseinheit wenigstens ein Bewässerungssystem zur Bewässerung des Bauwerks, insbesondere des Nutzraums, und des Nutzbodens. Vorteilhaft umfasst die Versorgungseinheit wenigstens ein Beleuchtungssystem zur Beleuchtung des Bauwerks, insbesondere des Nutzraums, und des Nutzbodens. Vorzugsweise umfasst die Versorgungseinheit wenigstens ein Heizsystem zum Heizen des Bauwerks und insbesondere des Nutzraums. Vorteilhaft umfasst die Versorgungseinheit wenigstens ein Lüftungssystem zur Lüftung des Bauwerks und insbesondere des Nutzraums. Vorzugseise können die einzelnen Systeme wenigstens teilweise in oder an der Gestelleinrichtung aufgenommen sein. Vorzugsweise ist wenigstens eine Steuereinheit zur Steuerung der Versorgungseinheit vorhanden. Vorteilhat kann so ein Klima in einem als Gewächshaus ausgebildeten Bauwerks so automatisch geregelt und gehalten werden. Darüber hinaus umfasst die Steuereinheit insbesondere wenigstens eine Datenschnittschelle zur Fernsteuerung, beispielsweise durch eine App mittels wenigstens eines Mobilfunkgeräts.

Vorteilhaft wird durch die Erfindung eine mobile landwirtschaftliche Vorrichtung zur Verfügung gestellt, bei welcher insbesondere ein bodenloses Gewächshaus an einer Gestelleinrichtung mit einer Rahmeneinrichtung mit einer Mehrzahl an Rahmenelementen aufnehmbar ist. Die Rahmeneinrichtung ist vorzugsweise als geschlossene Struktur ausgebildet, an welcher das Gewächshaus vollumfänglich aufgenommen und insbesondere verschraubt ist. Die Rahmenelemente der Rahmeneinrichtung sind vorteilhaft als Kufen ausgebildet oder werden wenigstens vorteilhaft als Kufen genutzt, sodass die Vorrichtung über den Boden ziehbar ist. Die Rahmenelemente umfassen vorteilhaft Hohlprofile. Vorzugsweise ist ein Hohlraum als Speichereinheit und insbesondere als Wasserspeicher nutzbar. Insbesondere ist wenigstens eine Versorgungseinheit zur Versorgung des Gewächshauses umfasst. Zur Bewässerung der Pflanzen ist vorzugsweise Wasser aus der Speichereinheit durch eine Pumpeneinheit entnehmbar. Vorteilhaft können externe Anschlüsse für Strom und Wasser vorhanden sein. Insbesondere ist wenigstens einer Energieeinheit mit eine Photovoltaikeinheit und einer Batterieeinheit zur Stromversorgung umfasst.

Vorteilhafterweise ist die Vorrichtung nicht mit der landwirtschaftlichen Nutzfläche verbunden, sodass keine Baugenehmigung zum Einsatz notwendig ist. Durch die steife Struktur kann die mobile Vorrichtung direkt über einen Acker gezogen werden und über einem nährstoffreichen und überdüngten Boden positioniert werden. Dadurch eignet sich die Nutzung der mobilen Vorrichtung besonders in Verbindung mit mobilen Geflügelställen, bei denen die Exkremente der Geflügeltiere den Nährstoffgehalt des Nutzbodens stark anreichen und insbesondere überdüngen, sodass eine Belastung für den Boden und das Grundwasser resultiert.

Das erfindungsgemäße Verfahren zur mobilen Bewirtschaftung wenigstens einer landwirtschaftlichen Nutzfläche umfasst wenigstens eine mobile landwirtschaftliche Vorrichtung mit einem bodenlosen Gewächshaus mit wenigstens einem Nutzraum, welches an wenigstens einer mobilen Gestelleinrichtung mit wenigstens einer Rahmeneinrichtung aufgenommen ist, welche eine Mehrzahl an Rahmenelementen aufweist. Die Rahmeneinrichtung trennt wenigstens einen Nutzabschnitt der landwirtschaftlichen Nutzfläche als Nutzboden ab, der von dem Nutzraum oberhalb der Rahmeneinrichtung aus zum Anbau von Pflanzen zugänglich ist. Die mobile Vorrichtung mit dem Gewächshaus wird auf einer landwirtschaftlichen Nutzfläche abgestellt, welche zuvor durch Exkremente von Geflügeltieren einer mobilen Geflügelstalleinheit, wie einem mobilen Hühnerstall mit Nährstoffen angereichert, und insbesondere überdüngt, wurde.

Das Verfahren hat viele Vorteile. Ein wesentlicher Vorteil des Verfahrens ist, dass der durch die mobile Geflügelstalleinheit gedüngte und insbesondere überdüngte Boden zum Anbau von Pflanzen genutzt wird. Insbesondere eignen sich starkzehrende Pflanzen, wie beispielsweise diverse Gemüsesorten Kartoffeln, Paprika, Peperoni, Chili, Tomaten, Auberginen, Zwiebeln, Knoblauch, Speiserüben, Rettich, Radieschen oder Kohlsorten bzw. Kreuzblütengewächse wie z.B. Blumenkohl oder Brokkoli oder Kräuter, wie z.B. Petersilie, Rucola oder Dill oder Kürbisgewächse wie z.B. Zuckermelonen, Gurken, Kürbis, oder Zucchini und weitere starkzehrende Anbaupflanzen zum Anbau auf den überdüngten Nutzflächen. Vorzugsweise ist ein biologischer Anbau im Gewächshaus möglich. Vorzugsweise kann dann dadurch auch eine Düngerbelastung des Grundwassers vermindert reduziert werden. Die landwirtschaftliche Vorrichtung ist daher besonders für Landwirte mit mobilen Geflügelställen geeignet. Durch das Verfahren ist das ökologische Gleichgewicht landwirtschaftlicher Nutzflächen förderbar.

In wenigstens einer vorteilhaften Weiterbildung des Verfahrens sind wenigstens zwei oder mehr Nutzflächen umfasst, wobei die mobile Geflügeleinheit und die mobile Vorrichtung mit dem Gewächshaus nacheinander auf den Nutzflächen zu deren Bewirtschaftung positioniert werden, wobei insbesondere die mobile Vorrichtung mit dem Gewächshaus der Geflügelstalleinheit Stalleinheit nachläuft.

Insbesondere wird so ein System zur Bewirtschaftung mehrerer zwei oder von zwei oder mehr Nutzflächen zur Verfügung gestellt, durch welches die Belastung des Grundwassers durch Dünger reduzierbar ist und gleichzeitig der ökologische und auch wirtschaftliche Anbau von Pflanzen ermöglicht wird.

Darüber hinaus können auch noch mehr landwirtschaftliche Nutzflächen durch dieses System bewirtschaftet werden. Insbesondere ist die Geflügelstalleinheit mit mehreren mobilen Vorrichtungen kombinierbar auch mit mehreren mobilen landwirtschaftlichen Vorrichtungen kombinierbar.

Insbesondere wird so ein Verfahren zur Verfügung gestellt, bei dem insbesondere die Geflügelstalleinheit zunächst beispielsweise werbewirksam am Feldrand auf einem Nutzabschnitt am Rand einer landwirtschaftlichen Nutzfläche aufgestellt wird. Der durch die Exkremente der Geflügeltiere überdüngte Boden kann anschließend nach dem Weiterziehen der mobilen Geflügelstalleinheit durch die mobile Vorrichtung mit dem Gewächshaus bewirtschaftet werden, sodass Pflanzen in dem Gewächshaus angebaut werden können.

Vorteilhafte Weiterbildungen des Verfahrens ergeben sich aus den Unteransprüchen und der gesamten Beschreibung.

Weitere vorteilhafte Weiterbildungen und Merkmale der vorliegenden Erfindung ergeben sich aus den Ausführungsbeispielen, welchem im Folgenden mit Bezug auf die beiliegenden Figuren erläutert werden. In den Figuren zeigen:
- Figur 1: eine rein schematische perspektivische Ansicht eines Ausführungsbeispiels einer erfindungsgemäßen mobilen landwirtschaftlichen Vorrichtung;
- Figur 2: eine rein schematische Draufsicht auf das Ausführungsbeispiel einer erfindungsgemäßen mobilen landwirtschaftlichen Vorrichtung;
- Figuren 3a,b: rein schematische Ansichten von Kufen der erfindungsgemäßen mobilen landwirtschaftlichen Vorrichtung;
- Figuren 4a,b: rein schematische Seitenansichten der Gestelleinrichtung des Ausführungsbeispiels der erfindungsgemäßen mobilen landwirtschaftlichen Vorrichtung;
- Figuren 5a,b: rein schematische Ansichten von Querschnitten durch die Gestelleinrichtung des Ausführungsbeispiels der erfindungsgemäßen mobilen landwirtschaftlichen Vorrichtung;
- Figur 6: eine rein schematische perspektivische Ansicht einer Steckverbindung des Ausführungsbeispiels der erfindungsgemäßen mobilen landwirtschaftlichen Vorrichtung;
- Figur 7: eine weitere rein schematische perspektivische Ansicht eines Stecksystems des Ausführungsbeispiels der erfindungsgemäßen mobilen landwirtschaftlichen Vorrichtung;
- Figur 8: eine rein schematische Draufsicht auf eine Gestelleinrichtung nach einem weiteren Ausführungsbeispiel der erfindungsgemäßen mobilen landwirtschaftlichen Vorrichtung;
- Figur 9: eine rein schematische Draufsicht auf eine Gestelleinrichtung mit einer Speichereinheit und einer Anschlusseinheit und einer Versorgungseinheit nach dem ersten Ausführungsbeispiel der erfindungsgemäßen mobilen landwirtschaftlichen Vorrichtung;
- Figur 10: eine rein schematische perspektivische Ansicht einer Ventileinheit des ersten Ausführungsbeispiels der erfindungsgemäßen mobilen landwirtschaftlichen Vorrichtung;
- Figur 11: eine rein schematische perspektivische Ansicht einer erfindungsgemäßen mobilen landwirtschaftlichen Vorrichtung mit einer höhenverstellbaren Radeinheit, einem Bewässerungssystem, einem Beleuchtungssystem, einem Heizsystem und einem Lüftungssystem nach dem ersten Ausführungsbeispiel;
- Figuren 12a,b: zeigen rein schematische Zeichnungen zum Ablauf des erfindungsgemäßen Verfahrens.

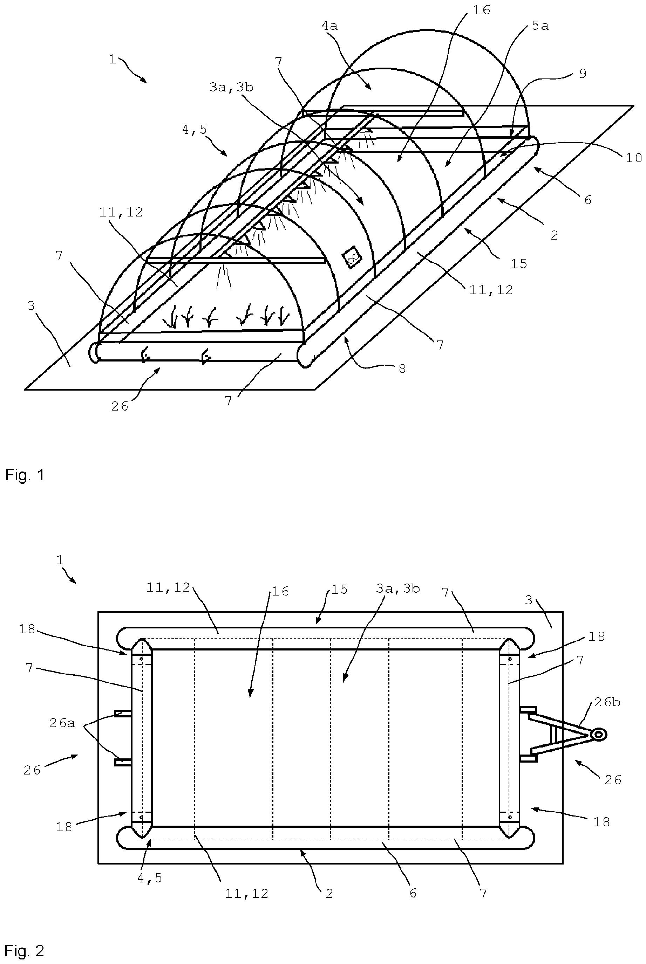

Figur 1 zeigt eine schematische perspektivische Ansicht einer erfindungsgemäßen mobilen landwirtschaftlichen Vorrichtung 1 zum mobilen Einsatz auf einer landwirtschaftlichen Nutzfläche 3. Die mobile landwirtschaftliche Vorrichtung 1 umfasst eine Gestelleinrichtung 2. An der Gestelleinrichtung 2 ist an der Oberseite 9 ein landwirtschaftliches Bauwerk 4 mit einem Nutzraum 4a an einer Aufnahmeeinheit 10 mittels eines Flansches 17 aufgenommen. Das Bauwerk 4 ist hier als Gewächshaus 5 ausgebildet. Das Gewächshaus 5 ist bodenlos und weist eine Bodenöffnung 5a auf.

Die Gestelleinrichtung 2 umfasst hier eine Rahmeneinrichtung 6. Die Rahmeneinrichtung 6 umfasst eine Mehrzahl an Rahmenelementen 7. Die Rahmeneinrichtung 6 trennt einen Nutzabschnitt 3a der Nutzfläche 3 als Nutzboden 3b ab. Der Nutzboden 3b ist von oberhalb der Rahmeneinrichtung 6 zugänglich. Der Nutzboden 3b ist hier von dem Nutzraum 4a des Gewächshauses 5 zugänglich. Das Gewächshaus 5 verfügt über eine Versorgungseinheit 29 zur Versorgung der Pflanzen im Nutzraum 4a.

Die Rahmenelemente 7 der Rahmeneinrichtung 6 bilden hier eine umfänglich geschlossene Struktur 15. Die Unterseite 8 der geschlossenen Struktur 15 liegt vollumfänglich auf der landwirtschaftlichen Nutzfläche 3 auf und bildet eine umrahmte Fläche 16.

Das Gewächshaus 5 ist über den Flansch 17 der Aufnahmeeinheit hier ebenfalls vollumfänglich berührend an der geschlossenen Struktur 15 aufgenommen. Der Nutzraum 4a des Gewächshauses 5 ist nach oben und umfänglich seitlich geschlossen, sodass ein eigenes Klima sich in dem Gewächshaus 5 einstellen kann. Darüber hinaus können keine Feldtiere wie Hasen in den Nutzraum 4a eindringen.

Die seitlichen Rahmenelemente 7 sind hier als Kufen 12 einer Kufeneinheit 11 ausgebildet. Hier sind zwei Kufen 12 vorhanden, auf denen die mobile landwirtschaftliche Vorrichtung 1 gleiten kann. An der Kopplungseinheit 26 kann beispielsweise ein Traktor angekoppelt werden, sodass die mobile Vorrichtung 1 über eine landwirtschaftliche Nutzfläche 3 wie einen Acker gezogen werden kann. Die Rahmeneinrichtung 6 bildet eine große Auflagefläche, sodass die Gestelleinrichtung 2 auch auf einem matschigen Acker nicht tief einsinkt.

Figur 2 zeigt eine rein schematische Draufsicht auf das Ausführungsbeispiel einer erfindungsgemäßen mobilen landwirtschaftlichen Vorrichtung 1. Die Rahmeneinrichtung 6 umfasst hier vier Rahmenelemente 7, welche jeweils paarweise durch eine sicherbare Steckverbindung 18 verbunden sind. Die geschlossene Struktur 15 bildet hier eine im Wesentlichen rechteckige Form. Der Nutzabschnitt 3a des Nutzbodens 3b ist vollflächig von Nutzraum 4a aus zugänglich. Die Kufen 12 der Kufeneinheit 11 werden durch Rahmenelemente 7 gebildet. Die Kufen erstrecken sich entlang der Rahmenelemente 7 in Zugrichtung.

Das Bauwerk 4, welches als Gewächshaus 5 ausgebildet ist, ist hier nur angedeutet.

Auf der linken Seite ist eine Kopplungseinheit 26 mit Ösen 26a angeordnet. Durch die Ösen 26a ist beispielsweise eine Kette zum Ziehen durchführbar oder z.B. eine Deichsel 26b einhängbar. Auf der rechten Seite ist die Kopplungseinheit 26 als Deichsel 26b ausgebildet. Die Deichsel 26b ist beispielsweise an einen Traktor anschließbar.

Der durch die Rahmeneinrichtung 6 abgetrennte Nutzabschnitt 3a der Nutzfläche 3 ist vollflächig durch den Nutzraum 4a zugänglich.

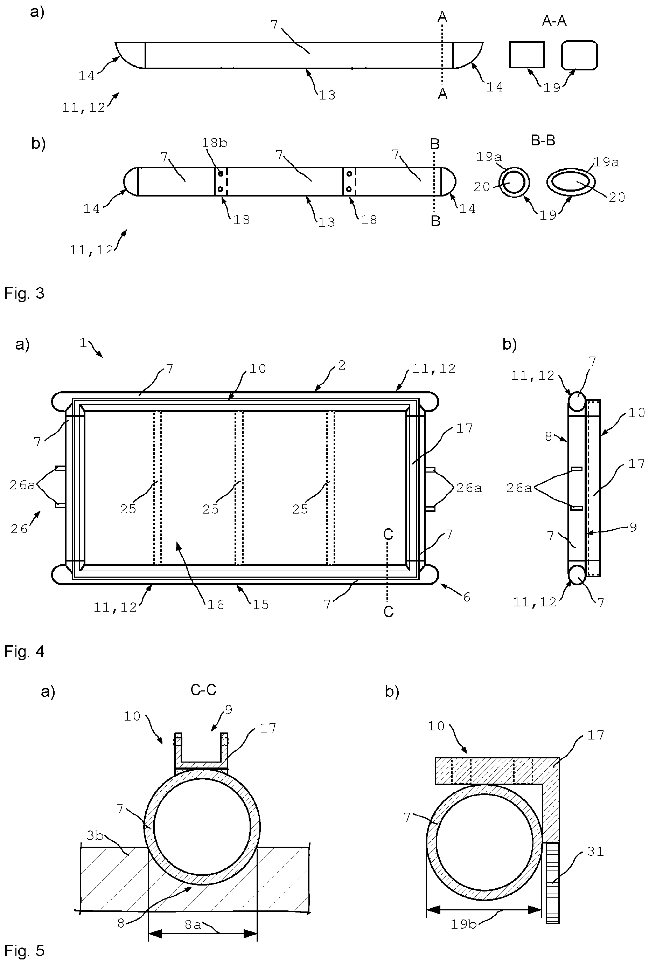

Figur 3a und Figur 3b zeigen rein schematische Ansichten von Kufen 12 der Kufeneinheit 11 der efindungsgemäßen mobilen landwirtschaftlichen Vorrichtung 1. In Figur 3a weist die Kufe 12 eine längliche Form auf. Die Kufe 12 weist einen Auflagebereich 13 und einen gekrümmten Einlaufbereich 14 auf. Die Kufe 12 ist spiegelsymmetrisch ausgebildet, sodass die Rahmeneinrichtung 6 in beide Richtungen ziehbar ist. Die Kufe 12 ist aus einem Vollmaterial hergestellt. Die Querschnitte A-A sind rechts neben der Kufe 12 dargestellt. Die Kufe 12 weist einen rechteckigen Außenquerschnitt 19 oder einen rechtechteckigen Querschnitt 19 mit abgerundeten Ecken 19 auf. In Figur 3b besteht die Kufe 12 aus drei Rahmenelementen 7, welche durch die Steckverbindung 18 verbunden sind. Die Kufe weist einen ovalen Querschnitt 19 auf, welcher rechts neben der Kufe durch die Querschnitt B-B dargestellt wird. Die Rahmenelemente 7 werden hier durch ein Hohlprofil 19a gebildet. Das Hohlprofil 19a weist hier eine Wandstärke von ca. 5 mm auf. Die Hohlprofile 19a weisen einen Hohlraum 20 auf. Die gekrümmten Endbereich 14 werden durch sphärische Kappen gebildet, welche die Hohlprofile 19a verschließen.

Figuren 4 a, b zeigen schematische Seitenansichten der Gestelleinrichtung 2 des Ausführungsbeispiels der erfindungsgemäßen mobilen landwirtschaftlichen Vorrichtung 1. Die Aufnahmeeinheit 10 weist hier einen vollumfänglich umlaufenden Flansch 17 zur Aufnahme des Bauwerks 4 auf. An dem Flansch 17 kann das Bauwerk 4 vollumfänglich berührend aufgenommen und mit der Gestelleinrichtung 2 kraftleitend verbunden werden.

Figuren 5 a, b zeigen rein schematische Ansichten von Querschnitten durch die Gestelleinrichtung 2 des Ausführungsbeispiels der erfindungsgemäßen mobilen landwirtschaftlichen Vorrichtung 1. In Figur 5a ist der Querschnitt entlang der Schnittlinie C-C, siehe Figur 4a dargestellt. Der Flansch 17 ist hier u-förmig ausgebildet. Die Aufnahmeeinheit 10 ist fest mit der Rahmeneinrichtung 6 verbunden. Rahmenelement 7 drückt sich im bestimmungsgemäßen Gebrauch wenigstens teilweise in den Nutzboden 3b ein, der so einen Nutzraum 4a abdichtet. Das Rahmenelement 7 weist hier eine große Auflagebreite 8a von ca. 100 mm auf. Figur 5b zeigt eine alternative Ausführungsform des Querschnitts C-C der Gestelleinrichtung 2. Hier ist der Flansch 17 als Winkelprofil zur Aufnahme des Bauwerks 4 ausgebildet. Der Durchmesser 19b des Rahmenelements 7 beträgt hier ca. 200 mm. Dadurch wird gewährleistet, dass die Rahmeneinrichtung 6 auch auf unebenen Nutzflächen 3 vollflächig aufliegen kann. Darüber hinaus sind Ausgleichselemente 31 vorhanden. Die Ausgleichselemente 31 sind hier als flexibler schwerer Vorhang aus Stahlmaterial ausgebildet, welcher an dem Flansch 17 befestigt ist, sodass der Vorhang auch tiefere Unebenheiten verschließt.

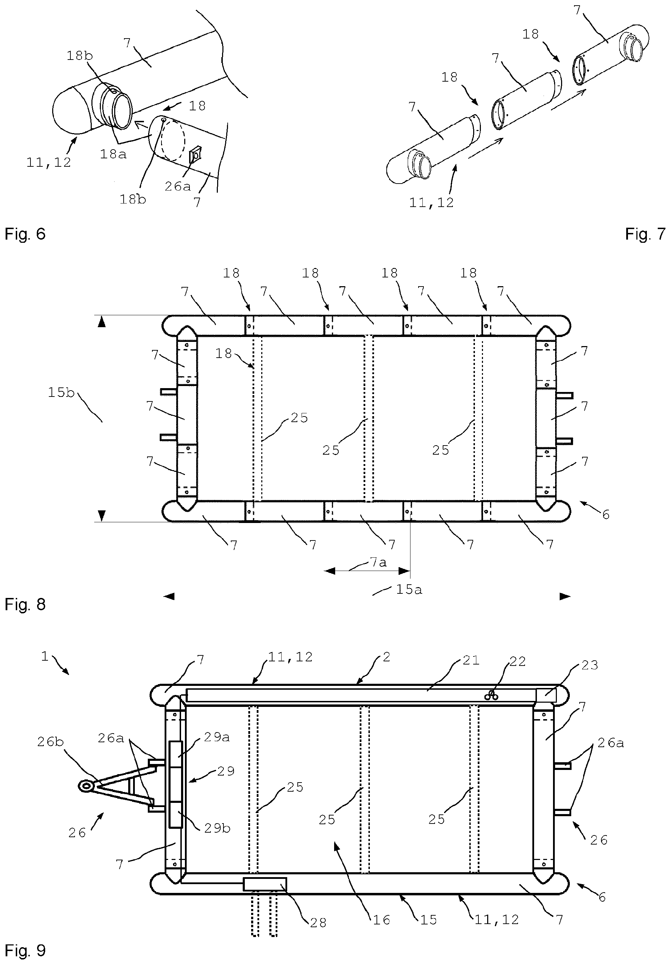

Figur 6 zeigt eine rein schematische perspektivische Ansicht einer Steckverbindung 18 des Ausführungsbeispiels der erfindungsgemäßen mobilen landwirtschaftlichen Vorrichtung 1. Die als Hohlprofile ausgebildeten Rahmenelemente 7 weisen ineinandergreifende Formelemente 18a auf, sodass die Rahmenelemente aneinander steckbar sind. Die Steckverbindung 18 wird hier durch Verbindungselemente 18b wie z.B. Schrauben 18b, Bolzen 18b oder Nieten 18b gesichert.

Figur 7 zeigt eine weitere rein schematische perspektivische Ansicht eines Stecksystems 18 des Ausführungsbeispiels der erfindungsgemäßen mobilen landwirtschaftlichen Vorrichtung 1. Die Kufe 12 wird hier durch drei als Hohlprofil 19a ausgebildete Rahmenelemente 7 gebildet, welche durch die Steckverbindung 18 paarweise miteinander verbunden sind.

Figur 8 zeigt eine rein schematische Draufsicht auf eine Gestelleinrichtung 2 nach einem weiteren Ausführungsbeispiel der erfindungsgemäßen mobilen landwirtschaftlichen Vorrichtung 1. Die Rahmeneinrichtung 6 wird hier durch eine Vielzahl an Rahmenelementen 7 gebildet, welche alle durch die Steckverbindung 18 miteinander verbunden sind. Ein Rahmenelement 7 weist hier eine Länge 7a von ca. 0,75 m auf. Die Rahmeneinrichtung weist eine Länge 15a von ca. 3,75 m bei einer Breite 15b von ca. 2,25 m auf, sodass die Vorrichtung 1 bequem durch einen Traktor ziehbar ist. Zum Transport über eine lange Strecke kann die Rahmeneinrichtung 6 demontiert werden und in die einzelnen Rahmenelemente 7 zerlegt werden. Die Rahmeneinrichtung 6 weist hier Verstrebungselemente 25 zur Erhöhung der Steifigkeit der Rahmeneinrichtung 6 und der geschlossenen Struktur 15 auf.

Figur 9 zeigt eine rein schematische Draufsicht auf eine Gestelleinrichtung 2 mit einer Speichereinheit 21 und einer Anschlusseinheit 28 und einer Versorgungseinheit 29 nach dem ersten Ausführungsbeispiel der erfindungsgemäßen mobilen landwirtschaftlichen Vorrichtung 1. Die Speichereinheit 20 umfasst hier einen Hohlraum 20, welcher im Wesentlichen durch die als Hohlprofil 19a ausgebildeter Rahmenelemente 7 gebildet wird. Die Speichereinheit 21 weist eine Ventileinheit 23 auf, wodurch die Speichereinheit 21 hier mit Wasser als Füllmedium 22 befüllbar ist.

An der Anschlusseinheit 28 werden ein Wasseranschluss und ein Stromanschluss für das Bauwerk 4 und die Bewirtschaftung der landwirtschaftlichen Nutzabschnitts 3b zur Verfügung gestellt. Hier sind eine Wasserleitung und eine Stromleitung anschließbar. Die Anschlusseinheit 28 ist mit der Versorgungseinheit 29 verbunden. Die Versorgungseinheit 29 umfasst hier eine Pumpeneinheit 29a und eine Energieeinheit 29b. Durch die Pumpeneinheit 29a kann Wasser aus der Speichereinheit 21 eingefüllt oder abgepumpt werden. Die Energieeinheit 29b umfasst eine nicht dargestellte Photovoltaikeinheit zur Erzeugung elektrischen Stroms und eine Batterieeinheit zum Speichern und eine Wechselrichtereinheit auf.

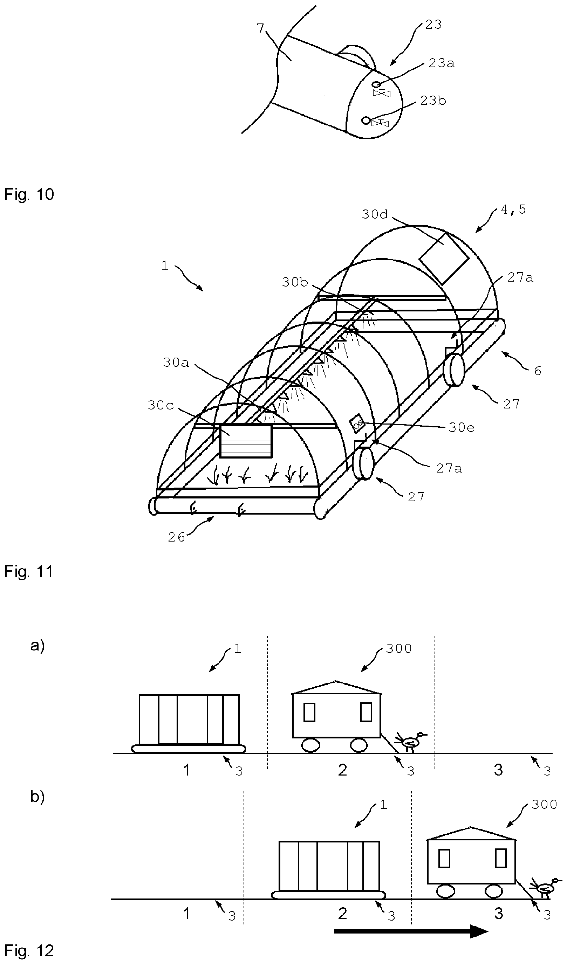

Figur 10 zeigt eine rein schematische perspektivische Ansicht einer Ventileinheit 23 des ersten Ausführungsbeispiels der erfindungsgemäßen mobilen landwirtschaftlichen Vorrichtung 1. Die Ventileinheit 23 umfasst ein Befüllventil 23a zum Befüllen mit Wasser und zum Ablassen des Füllmediums 22. Dadurch kann die ruhende Rahmeneinrichtung 6 durch eine Füllmedium 22 wie Wasser beschwert werden, sodass diese stabil vollumfänglich auf der landwirtschaftlichen Nutzfläche 3 aufliegt. Dabei sichert das Überdruckventil 23b vor einer Zerstörung der Rahmeneinrichtung 6. Wird der Druck innerhalb der Speichereinheit 21 beispielwiese durch Temperaturschwankungen sehr hoch oder sehr niedrig, sodass sich beispielsweise ein Füllmedium 22 wie Wasser stark ausdehnt, gibt das Überdruckventil 23b automatisch einen Ablassquerschnitt frei, sodass das Wasser abfließen kann und nicht die Rahmeneinrichtung 6 zerstört wird.

Figur 11 zeigt eine rein schematische perspektivische Ansicht einer erfindungsgemäßen mobilen landwirtschaftlichen Vorrichtung 1 mit einer höhenverstellbaren Radeinheit 27 nach dem ersten Ausführungsbeispiel. Es sind vier Räder von der Radeinheit 27 umfasst. Die Räder können manuell durch Handkurbeln 27a über Gewindespindeln hoch und runter gekurbelt werden. So können auch kurze Strecken über Straßen oder Wege ohne Schäden überwunden werden. Darüber hinaus umfasst die mobile Vorrichtung 1 hier ein Bewässerungssystem 30a, ein Beleuchtungssystem 30b, einem Heizsystem 30c und ein Lüftungssystem 30d zur Regulierung des Klimas in dem Gewächshaus 5, welche alle durch eine Steuereinheit 30e gesteuert werden.

Figuren 12 a, b zeigen rein schematische Zeichnungen zum Ablauf des erfindungsgemäßen Verfahrens. Hier sind drei landwirtschaftliche Nutzflächen 3 umfasst, siehe Figur 12 a Auf einer landwirtschaftlichen Nutzfläche 3 wird zunächst eine mobile Geflügelstalleinheit 300, welche hier als mobiler Hühnerstall ausgebildet ist, aufgestellt. Die Exkremente der Geflügeltiere düngen die landwirtschaftliche Nutzfläche 3, sodass sich hier Nährstoffe anreichern. Die Exkremente führen zunächst zu einer Anreicherung der landwirtschaftlichen Nutzfläche 3 mit Nährstoffen und schließlich zu einer Überdüngung. Wenn die mobile Geflügelstalleinheit 300 zur nächsten Nutzfläche 3 weiterbewegt wird, kann die mobile Vorrichtung 1 mit dem Gewächshaus 5 auf genau dieser Nutzfläche 3 aufgestellt werden, um den nährstoffreichen und insbesondere überdüngten Boden zum Anbau von starkzehrenden Nutzpflanzen wie beispielsweise Kartoffeln oder Kohl zu nutzen. In Figur 12b sind die mobile Vorrichtung 1 mit dem Gewächshaus 5 und die mobile Geflügelstalleinheit 300 beide auf die nächste Nutfläche 3 weitertransportiert worden. Dabei läuft die mobile Vorrichtung 1 mit dem Gewächshaus 5 der mobilen Geflügelstalleinheit 300 nach.

Weitere mögliche Vorteile und Merkmale der Erfindung sind nachfolgend stichpunktartig aufgelistet:
- Das Untergestell, insbesondere die Gestelleinrichtung (vorteilhaft in Form von Kufen) ist vorzugsweise direkt auf dem Boden stehend.
- Das Untergestell, insbesondere die Gestelleinrichtung:
   insbesondere Rohr, vorzugsweise Rahmenelemente mit Hohlprofil, mit Durchmesser von vorteilhaft 150 mm oder 200 mm, insbesondere Lebensmittel zugelassener Edelstahl, vorteilhaft mit Wasser, insbesondere als Füllmedium, befüllt.
- Das Untergestell, insbesondere Gestelleinrichtung, ist vorteilhaft mit Wasser, vorteilhaft als Füllmedium, gefüllt, dient insbesondere als Fundament, kann vorteilhaft als Wasserspeicher, vorteilhaft als Speichereinheit, insbesondere für eine Tropfbewässerung dienen.
- Bevorzugt bestehen alle Materialien aus für Lebensmittel zugelassenem Edelstahl, damit auch korrosionsgeschützt.
- Gewächshaus wird vorteilhaft mit Schrauben auf das Untergestell, insbesondere die Gestelleinrichtung, vorteilhaft mit Flansch aus aufgeschweißten U-Eisen verbunden.
- Insbesondere am Untergestell, insbesondere an der Gestelleinrichtung, sind Ösen angeschweißt. Die Ösen sind vorteilhaft nutzbar für einen Transport oder vorteilhaftes Verschieben oder insbesondere zum Abfangen von Windlasten vorzugsweise in Verbindung mit Erdankern.
- Anschlüsse für Elektrizität und/oder Wasser befinden sich vorteilhaft am Untergestell, insbesondere an der Gestelleinrichtung.
- Die elektrische Versorgung kann insbesondere autark (z. B. Photovoltaikanlage) oder vorteilhaft von externer Quelle erfolgen, vorteilhaft in Form einer Versorgungseinheit.
- Das Untergestell, insbesondere die Gestelleinrichtung, ist vorzugsweise zu allen Seiten geschlossen und bietet somit insbesondere Schutz vor eindringenden Tieren.
- Zur Tropfbewässerung dienen insbesondere flexible Anschlüsse, vorzugsweise eines Bewässerungssystems.
- Eine Steuerung und/oder Kontrolle per App ist insbesondere möglich.

### Sinn und Zweck (Produktbeschreibung):

- Das flexible, und vorteilhaft mobile, Gewächshaus ist insbesondere versetzbar und/oder vorzugsweise transportabel.
- Der Zusammenbau kann insbesondere vor Ort durch ein Montageteam oder vorteilhaft vom Käufer (Endnutzer) selber durchgeführt werden.
- Insbesondere durch die am Untergestell, insbesondere der Gestelleinrichtung, befindlichen Ösen kann das Untergestell, insbesondere die Gestelleinrichtung, vorteilhaft verschoben werden.

### Zweck bzw. Anwendung:

- Vorzugsweise optimal ist ein auf Kufen ruhendes Gewächshaus einzusetzen, indem es insbesondere in einem System mit einem Mobilstall, vorteilhaft einem mobilen Geflügelstall, verwendet wird.
- Hierbei besetzt es insbesondere den vorherigen Standort des Stalles, welcher insbesondere durch die Tierhaltung (Düngung) optimal auf die Bedürfnisse des Anbaus von Gemüse vorbereitet ist.

### Vorteile:

- Insbesondere Gute Ökobilanz
- Vorzugsweise saisonunabhängiges und regionales Gemüse, welches insbesondere direkt vermarktet werden kann, z. B. im Hofladen eines zugehörigen Bauernhofs
- Vorteilhafter zusätzlicher Kaufanreiz für regionale und nachhaltig produzierte Lebensmittel
- Vorteilhafte Baugenehmigungsfreiheit
- Grundlegend ist insbesondere die Idee der Verbindung von Gewächshaus und vorteilhaft einem mobilen System, vorzugsweise der ökologische Gedanke, vorzugsweise ein Mitnahmeeffekt für die Produkte eines Hofladens, eine insbesondere verbesserte Bodenstruktur, ganzjährig vorteilhaft frisches Gemüse.

### Problem:

- Insbesondere bei einer Hühnerhaltung in mobilen Hühnerställen, insbesondere in mobilen Geflügelställen, wird ein Mobilstall, insbesondere der mobile Geflügelstall, vorteilhaft mit einem Zugfahrzeug auf eine Weide/Wiese verbracht und bevorzugt an einem temporären Verweilort aufgestellt.
- An diesem Verweilort verbleibt der Mobilstall, insbesondere der mobile Geflügelstall, vorteilhaft in der Regel solange, bis vorzugsweise die den Stall, insbesondere der mobile Geflügelstall, umgebende Weideplatzfläche von den Hühnern abgeweidet wurde. Nach dem Abweiden wird der Mobilstall, insbesondere der mobile Geflügelstall, vorteilhaft verfahren bis zu einer anderen, benachbarten Stelle der Weide, und insbesondere der landwirtschaftlichen Nutzfläche, der Wiese.
- In der Regel wird vorteilhaft nach dem Abweiden der Weideplatzfläche, und insbesondere der landwirtschaftlichen Nutzfläche, diese wieder neu mit Grassamen eingesät, sodass vorteilhaft nach einer gewissen Wuchsdauer wieder eine frische, grasbewachsene Weidefläche, und insbesondere landwirtschaftlichen Nutzfläche, entsteht.
- Während der temporären Aufstelldauer am Verweilort wird insbesondere durch die Ausscheidungen der Hühner eine große Menge Düngung {Nährstoffe) in den Boden der jeweiligen Weideplatzfläche, und insbesondere der landwirtschaftlichen Nutzfläche, verbracht.
- Das dort insbesondere für einen Folgebewuchs angesäte Gras verbraucht insbesondere jedoch nur einen geringen Teil der durch die Hühner eingebrachten Düngung, was insbesondere zu einer ungewollten und schädlichen Überdüngung des Bodens führen kann.

### Eine besonders vorteilhafte Lösung:

- Die jeweils abgeweidete Weideplatzfläche, und insbesondere der landwirtschaftlichen Nutzfläche, wird mit Gemüsearten bepflanzt, die dem Boden mehr Nährstoffe entziehen als das üblicherweise eingesäte Gras. Um jedoch vorteilhaft ein schnelles und witterungsunabhängiges Wachstum des Gemüses zu erreichen, wird dieses in einem mobilen Gewächshaus, vorteilhaft eine mobile Vorrichtung mit einem Gewächshaus, aufgezogen, sodass insbesondere nach einer vergleichsweise kurzen Dauer vom Anpflanzen bis zur Gemüseernte die abgeerntete Fläche vorteilhaft wieder zum Einsäen mit Gras und somit als Weideplatzfläche, insbesondere der landwirtschaftlichen Nutzfläche, für Hühner zur Verfügung stehen kann.
- Ein vorschlagsmäßiges mobiles Gewächshaus, vorteilhaft eine mobile Vorrichtung mit einem Gewächshaus, weist hierfür keinen eigenen Pflanzboden auf, da das Gemüse direkt in den darunter befindlichen Weideboden, insbesondere die landwirtschaftliche Nutzfläche, gepflanzt wird.
- Für eine einfache Verschiebbarkeit weist das mobile Gewächshaus, vorteilhaft eine mobile Vorrichtung mit einem Gewächshaus, insbesondere ein Gleitgestell, vorteilhaft eine Gestelleinrichtung, mit Kufen auf, mit welchem es insbesondere an einen auf einem Bauernhof üblicherweise vorhandenen Zugfahrzeug, wie beispielsweise einem Traktorfestgelegt und vorteilhaft nach dem Abernten des Gemüses an seinen neuen Einsatzort gezogen werden kann, wobei es insbesondere wie ein Schlitten Ober den Wiesenboden, vorteilhaft die landwirtschaftliche Nutzfläche, gleitet. Insbesondere die Bauteile eines an sich bekannten Gewächshauses, vorteilhaft der mobilen Vorrichtung mit dem Gewächshaus, wie Seitenwände und Dach, können hierbei mit dem Gleitgestell verbunden sein und vorzugsweise verschraubt.
- Das Gleitgestell, insbesondere die Gestelleinrichtung, mit seinen Kufen kann vorteilhaft komplett aus mit untereinander verbundenen Rohren, vorteilhaft Rahmenelementen aus Hohlprofilen, bestehen und weist insbesondere einen Befüllanschluss, vorteilhaft eine Ventileinheit mit einem Befüllventil, auf, durch den insbesondere die wasserführend miteinander verbundenen Rohrabschnitte, insbesondere die als Hohlprofile ausgebildeten Rahmenelemente, mit Druckwasser als Füllmedium - z. B aus einem Hauswasseranschluss - befüllt werden können. Zudem kann ein Ablauf vorgesehen sein, durch den das Wasser als Füllmedium aus dem Gleitgestell, insbesondere der Gestelleinrichtung abgelassen werden kann, insbesondere wenn das Gewächshaus verschoben oder anderweitig transportiert werden soll.
- Zwischen den eigentlichen Gleitschienen, die vorteilhaft als Kufen ausgebildet sind und die insbesondere auf dem Boden aufliegen, verlaufen vorteilhaft Verstrebungselemente, die insbesondere als Bewässerungsrohre mit Öffnungen für eine Tröpfchenbewässerung des Bodens und somit der Gemüsepflanzen ausgebildet sein können. Insbesondere wird das eingeleitete Wasser tropft aus diesen Öffnungen heraus oder wird für die Pflanzenberegnung durch in den Öffnungen eingebrachte Sprühdüsen fein versprüht.
- Das in das Gleitgestell, insbesondere die Gestelleinrichtung, eingeleitete Wasser als Füllmedium wird vorteilhaft verwendet insbesondere für eine Beschwerung des Gleitgestells, insbesondere der Gestelleinrichtung - insbesondere dann wenn das mobile Gewächshaus, vorzugsweise die mobile Vorrichtung mit dem Gewächshaus, nicht im Boden verankert wird. Eine verankerungsfreie Aufstellung kann vorteilhaft ohne eine ansonsten erforderliche Baugenehmigung erfolgen. Durch das Gewicht des befüllten Gleitgestells, insbesondere der Gestelleinrichtung, ist das mobile Gewächshaus, vorzugsweise die mobile Vorrichtung mit der Gestelleinrichtung, insbesondere wirkungsvoll gegen ein Umfallen, z. B. durch einwirkende Windlasten, gesichert.
- Wenn der Mobilstall, insbesondere die mobile Geflügelstalleinheit, insbesondere vom abgegrasten Platz an seinen neuen Einsatzort verbracht wird, rückt das mobile Gewächshaus, vorteilhaft die mobile Vorrichtung mit dem Gewächshaus, insbesondere auf, um vorteilhaft die abgegraste Fläche mit Gemüse zu bepflanzen. Das Gewächshaus, vorteilhaft die mobile Vorrichtung mit dem Gewächshaus, bevorzugt folgt also quasi dem Mobilstall, insbesondere die mobile Geflügelstalleinheit, und ist somit insbesondere in dessen räumlicher Nähe.
- Sofern für das Betreiben des Gewächshauses, insbesondere die mobile Geflügelstalleinheit, eine Stromversorgung benötigt wird, z. B. für das motorische Öffnen und Schließen von Fenstern zur Temperierung des Gewächshausinneren, kann das Gewächshaus, insbesondere die mobile Geflügelstalleinheit, insbesondere spannungsführend mit dem Mobilstall, insbesondere die mobile Geflügelstalleinheit, verbunden sein, wenn dieser ohnehin mit Strom versorgt ist. Das Gewächshaus kann jedoch auch vorteilhaft über eine eigene, vom Mobilstall, insbesondere die mobile Geflügelstalleinheit, unabhängig vorgesehene Stromversorgung gespeist sein.
- Gleiches gilt vorzugsweise für die Wasserversorgung, die insbesondere für die Versorgung der Hühner im, insbesondere die mobile Geflügelstalleinheit, vorhanden ist und vorteilhaft für den Betrieb des
   Gewächshauses, insbesondere der mobilen Vorrichtung mit dem Gewächshaus, verwendet werden kann.
- Für eine flexible Bewässerungsleistung kann das mobile Gewächshaus, insbesondere der mobilen Vorrichtung mit dem Gewächshaus, insbesondere eine Pumpe zur Druckerhöhung und Förderung des Wassers aufweisen.
- Die Wasserversorgung der Gemüsepflanzen sowie die Temperierung des Gewächshauses, insbesondere der mobilen Vorrichtung mit dem Gewächshaus, kann vorteilhaft überwacht und/oder vorteilhaft gesteuert werden durch die Verwendung von Apps auf mobilen Endgeraten, wie Smartphones oder Laptops.
- Um vorteilhaft einen Transport des Gewächshauses auch über einen nicht gleitfähigen Boden - z. B. beim Überfahren von Verkehrsflächen - zu erleichtern, kann das mobile Gewächshaus, insbesondere der mobilen Vorrichtung mit dem Gewächshaus, insbesondere ein Fahrwerk aufweisen mit Rollen oder Rädern.

**Bezugszeichenliste:**

| | | | |
|---|---|---|---|
| 1 | mobile landwirtschaftliche Vorrichtung | 18b | Verbindungselement |
| | | 19 | Außenquerschnitt |
| 2 | Gestelleinrichtung | 19a | Hohlprofil |
| 3 | landwirtschaftliche Nutzfläche | 19b | Durchmesser von 7 |
| | | 20 | Hohlraum |
| 3a | Nutzabschnitt | 21 | Speichereinheit |
| 3b | Nutzboden | 22 | Füllmedium, Wasser |
| 4 | landwirtschaftliches Bauwerk | 23 | Ventileinheit |
| | | 23a | Befüllventil |
| 4a | Nutzraum | 23b | Überdruckventil |
| 5 | Treibhaus, Gewächshaus | 25 | Verstrebungselement |
| 5a | Bodenöffnung | 26 | Kopplungseinheit |
| 6 | Rahmeneinrichtung | 26a | Öse |
| 7 | Rahmenelement | 26b | Deichsel |
| 7a | Länge von 7 | 27 | höhenverstellbare Radeinheit |
| 8 | Unterseite von 6 | | |
| 8a | Auflagebreite | 27a | Handkurbel |
| 9 | Oberseite von 6 | 28 | Anschlusseinheit |
| 10 | Aufnahmeeinheit | 29 | Versorgungseinheit |
| 11 | Kufeneinheit | 29a | Pumpeneinheit |
| 12 | Kufe | 29b | Energieeinheit |
| 13 | Auflagebereich | 30a | Bewässerungssystem |
| 14 | Einlaufbereich | 30b | Beleuchtungssystem |
| 15 | vollumfänglich geschlossene Struktur | 30c | Heizsystem |
| | | 30d | Lüftungssystem |
| 15a | Länge | 30e | Steuereinheit |
| 15b | Breite | 31 | Ausgleichselement |
| 16 | umrahmte Fläche von 15 | 300 | mobile Geflügelstalleinheit, mobiler Hühnerstall |
| 17 | Flansch von 10 | | |
| 18 | Steckverbindung | | |
| 18a | Formelement | | |

## Patentansprüche

1. Mobile landwirtschaftliche Vorrichtung (1) für den Einsatz auf wenigstens einer landwirtschaftlichen Nutzfläche (3), umfassend wenigstens eine mobile Gestelleinrichtung (2) zur Aufnahme wenigstens eines wenigstens abschnittsweise überdachten und einen Nutzraum (4a) zur Verfügung stellenden landwirtschaftlichen Bauwerks (4), wie einem Treibhaus (5) oder einem Gewächshaus (5),
wobei die Gestelleinrichtung (2) wenigstens eine Rahmeneinrichtung (6) mit einer Mehrzahl an Rahmenelementen (7) umfasst,
**dadurch gekennzeichnet,**
**dass** durch die Rahmeneinrichtung (6) wenigstens ein Nutzabschnitt (3a) der Nutzfläche (3) als Nutzboden (3b) abtrennbar ist, der im Wesentlichen vollflächig von oberhalb der Rahmeneinrichtung (6) aus zugänglich ist.

2. Mobile landwirtschaftliche Vorrichtung (1) nach dem vorhergehenden Anspruch, wobei wenigstens ein landwirtschaftliches Bauwerk (4) an der Gestelleinrichtung (2) aufgenommen ist.

3. Mobile landwirtschaftliche Vorrichtung (1) nach dem vorhergehenden Anspruch, wobei das landwirtschaftliche Bauwerk (4) bodenlos ausgebildet ist oder über einen wesentlichen Teil des Nutzabschnitts (3a) eine Bodenöffnung (5a) aufweist und einen nach oben und/oder umfänglich schließbaren Nutzraum (4a) ausbildet.

4. Mobile landwirtschaftliche Vorrichtung (1) nach einem der vorhergehenden Ansprüche, wobei die Gestelleinrichtung (2) wenigstens eine Kufeneinheit (11) mit wenigstens einer Kufe (12) und/oder wenigstens eine höhenverstellbare Radeinheit (27) aufweist.

5. Mobile landwirtschaftliche Vorrichtung (1) nach dem vorhergehenden Anspruch, wobei wenigstens ein Teil der Rahmenelemente (7) als Kufen (12) ausgebildet sind, auf welchen die Gestelleinrichtung (2) ruhen kann und über die landwirtschaftliche Nutzfläche (3) ziehbar ist und wobei die Kufen (12) wenigstens teilweise einen schräg verlaufenden oder gekrümmten Endbereich (14) aufweisen.

6. Mobile landwirtschaftliche Vorrichtung (1) nach einem der beiden vorhergehenden Ansprüche, wobei wenigstens die als Kufen (12) ausgebildeten Rahmenelemente (7) wenigstens auf einer Unterseite (8) einen ovalen Außenquerschnitt (19) oder einen rechteckigen Außenquerschnitt (19) mit vorzugsweise abgerundeten Ecken aufweisen, wobei wenigstens die als Kufen (12) ausgebildeten Rahmenelemente (7) eine Auflagebreite (8a) zwischen 50 mm und 400 mm aufweisen.

7. Mobile landwirtschaftliche Vorrichtung (1) nach einem der vorhergehenden Ansprüche, wobei die Rahmeneinrichtung (6) wenigstens eine umfänglich geschlossene Struktur (15) aus Rahmenelementen (7) umfasst und wobei die geschlossene Struktur (15) auf der landwirtschaftlichen Nutzfläche (3) aufliegt und wobei das landwirtschaftliche Bauwerk (4) berührend an der geschlossenen Struktur (15) aufnehmbar ist.

8. Mobile landwirtschaftliche Vorrichtung (1) nach einem der vorhergehenden Ansprüche, wobei an der Gestelleinrichtung (2) wenigstens abschnittsweise Ausgleichselemente (31) zur Abdichtung der Rahmeneinrichtung (6) gegenüber der Nutzfläche (3) vorgesehen sind.

9. Mobile landwirtschaftliche Vorrichtung (1) nach einem der vorhergehenden Ansprüche, wobei die Rahmeneinrichtung (6) eine Länge (15a) zwischen ca. 2 m und ca. 20 m aufweist und wobei die Rahmeneinrichtung (6) eine Breite (15b) zwischen ca. 3 m und ca. 8 m aufweist.

10. Mobile landwirtschaftliche Vorrichtung (1) nach einem der vorhergehenden Ansprüche, wobei die Rahmenelemente (7) wenigstens teilweise als Hohlprofil (19a) ausgebildet sind und umfassend wenigstens eine Speichereinheit (21) mit wenigstens einem geschlossenen Hohlraum (20), in dem wenigstens ein Füllmedium (22), wie Wasser, Kies, Sand, Schüttgut, Beton oder dergleichen aufnehmbar ist und wobei die Speichereinheit (21) wenigstens eine Ventileinheit (23) aufweist.

11. Mobile landwirtschaftliche Vorrichtung (1) nach einem der vorhergehenden Ansprüche, wobei die Gestelleinrichtung (2) wenigstens eine Kopplungseinheit (26) zum Anschluss an eine Zugmaschine umfasst.

12. Mobile landwirtschaftliche Vorrichtung (1) nach einem der vorhergehenden Ansprüche, umfassend wenigstens eine Anschlusseinheit (28), insbesondere mit wenigstens einem Wasseranschluss und/oder wenigstens einem Stromanschluss, und/oder wenigstens eine Versorgungseinheit (29) zur Versorgung des Bauwerks (4) mit elektrischer Energie und/oder Wasser.

13. Mobile landwirtschaftliche Vorrichtung (1) nach einem der vorhergehenden Ansprüche, wobei die Versorgungseinheit (29) wenigstens ein Bewässerungssystem (30a) und/oder ein Beleuchtungssystem (30b) und/oder ein Heizsystem (30c) und/oder ein Lüftungssystem (30d) umfasst, welche durch wenigstens eine Steuereinheit (30e) steuerbar sind.

14. Verfahren zur mobilen Bewirtschaftung wenigstens einer landwirtschaftlichen Nutzfläche (3) mittels wenigstens einer mobilen landwirtschaftlichen Vorrichtung (1) mit einem bodenlosen Gewächshaus (5) mit wenigstens einem Nutzraum (4a), welches an wenigstens einer mobilen Gestelleinrichtung (2) mit wenigstens einer Rahmeneinrichtung (6) aufgenommen ist, welche eine Mehrzahl an Rahmenelementen (7) umfasst, wobei die Rahmeneinrichtung (6) wenigstens einen Nutzabschnitt (3a) der Nutzfläche (3) als Nutzboden (3b) abtrennt, der von dem Nutzraum (4a) oberhalb der Rahmeneinrichtung (6) zur Bewirtschaftung zugänglich ist, **dadurch gekennzeichnet,**
**dass** das die mobile Vorrichtung (1) mit dem Gewächshaus (5) auf einer landwirtschaftlichen Nutzfläche (3) zur Bewirtschaftung abgestellt wird, welche zuvor durch Exkremente von Geflügeltieren einer mobilen Geflügelstalleinheit (300) mit Nährstoffen angereichert, und insbesondere überdüngt, wurde.

15. Verfahren nach dem vorhergehenden Anspruch, umfassend wenigstens zwei oder mehr Nutzflächen (3), wobei die Geflügelstalleinheit (300) und die mobile Vorrichtung (1) mit dem Gewächshaus (5) nacheinander auf den Nutzflächen (3) zur deren Bewirtschaftung positioniert werden, wobei die mobile Vorrichtung (1) mit dem Gewächshaus (5) der Geflügelstalleinheit (300) nachläuft.
